# EUROPEAN PATENT APPLICATION

(11) **EP 4 647 231 A1**
(43) Date of publication of application: **12.11.2025**
(21) Application number: 24858549.9
(22) Date of filing: 27.08.2024
(51) Int. Cl.: B29C 45/14, B29C 45/76, B29C 45/78, B43K 19/16, B43K 19/14

(54) **SILICONE PENCIL PREPARATION DEVICE AND METHOD**

(30) Priority: 31.08.2023 CN 202311110165
(71) Applicant: Binzhou PSL Pencil Co., Ltd., Binzhou, Shandong 256660 (CN)
(72) Inventor: SUN, Zeyong, Binzhou, Shandong 256660 (CN); SUN, Chenxi, Binzhou, Shandong 256660 (CN); SUN, Chenhao, Binzhou, Shandong 256660 (CN)
(74) Representative: Casalonga
(86) International application number: PCT/CN2024/114690
(87) International publication number: WO 2025/045013

(57) **Abstract**

Disclosed in embodiments of the present disclosure are a silicone pencil preparation device and method. A specific embodiment of the silicone pencil preparation device comprises: a conveying apparatus, a grabbing apparatus, a silicone injection molding machine, and a control apparatus. The conveying apparatus comprises an unprocessed pencil conveying apparatus and a processed pencil conveying apparatus. The silicone injection molding machine comprises a main machine, the main machine is provided with a mold and a mold closing system, the mold comprises a front mold and a rear mold, the mold is secured onto the mold closing system comprised in the main machine, and a middle portion of a front mold cavity is provided with a pencil carrying slot. The control apparatus is configured to perform the following steps: moving an unprocessed pencil conveyed by the unprocessed pencil conveying apparatus to the pencil carrying slot; performing a mold closing operation; performing an injection molding operation on the front mold cavity and a rear mold cavity; performing a mold splitting operation; and moving a processed pencil in the pencil carrying slot to the processed pencil conveying apparatus. According to the silicone pencil prepared by the silicone pencil preparation device, the use comfort of a user and the safety during use can be improved.

## Description

### Field of the Invention

Embodiments of the present disclosure relate to the technical field of preparation of silicone pencils, and in particular to a silicone pencil preparation device and method.

### Background of the Invention

Pencils are those intended for writing, drawing and sketching. At present, a pencil preparation method generally includes: wrapping a core with a wooden material and then applying a layer of paint to the exterior of a wooden pencil.

However, the inventor found that the above-mentioned pencil preparation method often had technical problems as follows.

First, a prepared wooden pencil is hard, and the hand of a user using it for a long time is prone to calluses, resulting in low use comfort of the user. Moreover, in most cases, the external paint layer contains harmful substances, which are extremely hazardous to the health of children when they bite it, resulting in low safety during use.

Second, the speed of preparing the pencil is not determined according to the characteristics of preparation materials, such that the prepared pencils have a low pass rate and more pencils are discarded, resulting in a waste of resources.

Third, defect recognition is not performed on the front and back sides of the prepared pencil, such that the pencil finally obtained by a user may have many defects and a bad sense of use, resulting in poor user experience.

The above information disclosed in the background art section is intended only to enhance the understanding of the background of the conceptions of the present invention. Hence, it may include information that does not form the prior art known to those skilled in the art in China.

### Summary of the Invention

The summary section of the present disclosure is intended to introduce the conceptions in a brief manner, and these conceptions will be described in detail in the detailed description section below. The summary section of the present disclosure is neither intended to identify key or essential features of the technical solutions claimed, nor intended to limit the scope of the technical solutions claimed.

Some embodiments of the present disclosure propose a silicone pencil preparation method and device to solve one or more technical problems mentioned in the background art section.

In a first aspect, some embodiments of the present disclosure provide a silicone pencil preparation device, comprising a conveying apparatus, a grabbing apparatus, a silicone injection molding machine, and a control apparatus, wherein the conveying apparatus comprises an unprocessed pencil conveying apparatus and a processed pencil conveying apparatus, the unprocessed pencil conveying apparatus is configured to convey an unprocessed pencil, and the processed pencil conveying apparatus is configured to convey a processed pencil; the grabbing apparatus is located between the unprocessed pencil conveying apparatus and the processed pencil conveying apparatus, and the silicone injection molding machine is located on either side of the grabbing apparatus; the silicone injection molding machine comprises a main machine, the main machine is provided with a mold and a mold closing system, the mold comprises a front mold and a rear mold, the mold is secured onto the mold closing system comprised in the main machine, the front mold is provided with a front mold cavity, the rear mold is provided with a rear mold cavity, a middle portion of the front mold cavity is provided with a pencil carrying slot, and the front mold cavity is connected to the rear mold cavity when the front mold and the rear mold are closed; the conveying apparatus, the grabbing apparatus and the silicone injection molding machine are all in communication connection with the control apparatus; and the control apparatus is configured to perform the following steps: controlling the grabbing apparatus to move the unprocessed pencil conveyed by the unprocessed pencil conveying apparatus to the pencil carrying slot, controlling the mold closing system comprised in the silicone injection molding machine to perform a mold closing operation, controlling the silicone injection molding machine to perform an injection molding operation on the front mold cavity and the rear mold cavity, controlling the mold closing system comprised in the silicone injection molding machine to perform a mold splitting operation, and controlling the grabbing apparatus to move the processed pencil in the pencil carrying slot to the processed pencil conveying apparatus.

Optionally, the silicone pencil preparation device further comprises a visual detection apparatus, which is disposed on either side of the processed pencil conveying apparatus, wherein the visual detection apparatus is in communication connection with the control apparatus, and comprises an image collection assembly, an image processing assembly and an image recognition assembly; the visual detection apparatus is configured to perform the following steps: collecting, by the image collection assembly, an image of the processed pencil carried by the processed pencil conveying apparatus to obtain a processed pencil image, preprocessing, by the image processing assembly, the processed pencil image to obtain a preprocessed processed pencil image, performing, by the image recognition assembly, defect recognition on the preprocessed processed pencil image to obtain a defect recognition result, and sending the defect recognition result to the control apparatus; and the control apparatus is further configured to control, based on the received defect recognition result, the grabbing apparatus to perform a grabbing operation corresponding to the defect recognition result.

Optionally, the silicone pencil preparation device further comprises a waste box, which is located on either side of the grabbing apparatus; and the control apparatus is further configured to control, in response to the received defect recognition result representing that a processed pencil is defective, the grabbing apparatus to place the defective processed pencil into the waste box.

Optionally, the pencil carrying slot has a depth greater than that of the front mold cavity; and an inner side of the pencil carrying slot has a shape in engagement with a shape of an outer side of the unprocessed pencil, the front mold cavity has a dimension greater than a dimension of the inner side of the pencil carrying slot, and a gap between the front mold cavity and the pencil carrying slot is used to form a silicone layer.

Optionally, the silicone pencil preparation device further comprises a feeding system and a mixing system, wherein the feeding system is configured to supply liquid silicone to the main machine, and the mixing system is configured to mix the supplied liquid silicone.

Optionally, the liquid silicone supplied by the feeding system comprises a first preset liquid silicone and a second preset liquid silicone, wherein a ratio of the first preset liquid silicone to the second preset liquid silicone is 1:1.

Optionally, the grabbing apparatus is a robotic arm, a hand of the robotic arm is provided with a vacuum cup shaped as a long strip, and a bottom recess of the vacuum cup has a shape in engagement with a shape of the unprocessed or processed pencil.

In a second aspect, some embodiments of the present disclosure provide a silicone pencil preparation method, which is applied to the silicone pencil preparation device according to the first aspect, wherein the silicone pencil preparation device comprises a conveying apparatus, a grabbing apparatus, a silicone injection molding machine, and a control apparatus, the conveying apparatus comprises an unprocessed pencil conveying apparatus and a processed pencil conveying apparatus, the silicone injection molding machine comprises a main machine, the main machine is provided with a mold and a mold closing system, the mold comprises a front mold and a rear mold, the front mold is provided with a front mold cavity, the rear mold is provided a rear mold cavity, and a middle portion of the front mold cavity is provided with a pencil carrying slot; and the method comprises: moving an unprocessed pencil conveyed by the unprocessed pencil conveying apparatus to the pencil carrying slot by the grabbing apparatus, performing a mold closing operation by the mold closing system comprised in the silicone injection molding machine, performing an injection molding operation on the front mold cavity and the rear mold cavity by the silicone injection molding machine, performing a mold splitting operation by the mold closing system comprised in the silicone injection molding machine, and moving the processed pencil in the pencil carrying slot to the processed pencil conveying apparatus by the grabbing apparatus.

Optionally, the silicone injection molding machine further comprises a heating system, a viscosity sensor and at least one temperature sensor; and performing the injection molding operation on the front mold cavity and the rear mold cavity by the silicone injection molding machine, includes: detecting a temperature of the mold to obtain mold temperature information, generating a mold preheating temperature to be adjusted according to preset mold preheating temperature information and the mold temperature information, preheating the mold by the heating system according to the mold preheating temperature to be adjusted and a preset mold heating time, and detecting a temperature of the liquid silicone to obtain silicone temperature information. Here, the silicone temperature information may represent the temperature of the liquid silicone; a silicone preheating temperature to be adjusted is generated according to preset silicone temperature information and the silicone temperature information; liquid silicone to be injected is preheated by the preheating system according to the silicone preheating temperature to be adjusted; and according to a target injection molding pressure and a target injection molding speed, an injection molding operation corresponding to the target injection molding pressure and the target injection molding speed is performed by the injection molding system comprised in the silicone injection molding machine, wherein the target injection molding pressure and the target injection molding speed are determined by an artificial intelligence chip according to a real-time silicone temperature detected by the temperature sensor and a real-time silicone viscosity detected by the viscosity sensor, a machine learning mold carried by the artificial intelligence chip is obtained by training with a training sample set, in which training samples include sample silicone temperatures and sample silicone viscosities.

Optionally, the silicone pencil preparation device further comprises a visual detection apparatus and a rotation apparatus. The method further includes: collecting an image of a processed pencil carried on the processed pencil conveying apparatus under a first light source and an image of the processed pencil under a second light source by the visual detection apparatus to obtain a first processed pencil image and a second processed pencil image; performing a rotating operation on the processed pencil by the rotation apparatus; collecting an image of the rotated processed pencil under the first light source and an image of the rotated processed pencil under the second light source to obtain a first rotated pencil image and a second rotated pencil image; performing denoising on the first processed pencil image and the second processed pencil image to obtain a first denoised processed pencil image and a second denoised processed pencil image; performing denoising on the first rotated pencil image and the second rotated pencil image to obtain a first denoised rotated pencil image and a second denoised rotated pencil image; processing edges of the first denoised processed pencil image and the second denoised processed pencil image to obtain a first processed pencil edge image and a second processed pencil edge image; processing edges of the first denoised rotated pencil image and the second denoised rotated pencil image to obtain a first rotated pencil edge image and a second rotated pencil edge image; determining a defect recognition result corresponding to the processed pencil based on the first processed pencil edge image, the second processed pencil edge image, the first rotated pencil edge image and the second rotated pencil edge image; and performing a grabbing operation corresponding to the defect recognition result based on the determined defect recognition result.

The above-mentioned embodiments of the present disclosure have the following beneficial effects: the silicone pencil prepared by the silicone pencil preparation device, according to some embodiments of the present disclosure, can improve the use comfort of a user and safety during use. Specifically, the reasons for low use comfort of a user and low safety during use caused by the pencil prepared by relevant pencil preparation methods lie in that: a prepared wooden pencil is hard, and the hand of a user using it for a long time is prone to calluses, resulting in low use comfort of a user. Moreover, in most cases, the external paint layer contains harmful substances, which are extremely hazardous to the health of children when they bite it, resulting in low safety during use. Based on this, the silicone pencil preparation device according to some embodiments of the present disclosure comprises a conveying apparatus, a grabbing apparatus, a silicone injection molding machine, and a control apparatus, wherein the conveying apparatus comprises an unprocessed pencil conveying apparatus and a processed pencil conveying apparatus, the unprocessed pencil conveying apparatus is configured to convey an unprocessed pencil, and the processed pencil conveying apparatus is configured to convey a processed pencil; the grabbing apparatus is located between the unprocessed pencil conveying apparatus and the processed pencil conveying apparatus, and the silicone injection molding machine is located on either side of the grabbing apparatus; the silicone injection molding machine comprises a main machine, the main machine is provided with a mold and a mold closing system, the mold comprises a front mold and a rear mold, the mold is secured onto the mold closing system comprised in the main machine, the front mold is provided with a front mold cavity, the rear mold is provided with a rear mold cavity, a middle portion of the front mold cavity is provided with a pencil carrying slot, and the front mold cavity is connected to the rear mold cavity when the front mold and the rear mold are closed; the conveying apparatus, the grabbing apparatus and the silicone injection molding machine are all in communication connection with the control apparatus; and the control apparatus is configured to perform the following steps: controlling the grabbing apparatus to move the unprocessed pencil conveyed by the unprocessed pencil conveying apparatus to the pencil carrying slot, controlling the mold closing system comprised in the silicone injection molding machine to perform a mold closing operation, controlling the silicone injection molding machine to perform an injection molding operation on the front mold cavity and the rear mold cavity, controlling the mold closing system comprised in the silicone injection molding machine to perform a mold splitting operation, and controlling the grabbing apparatus to move the processed pencil in the pencil carrying slot to the processed pencil conveying apparatus. A layer of silicone is inject-molded outside the unprocessed pencil, such that the outer layer of the pencil can be wrapped by the silicone. Due to the softness of the silicone, the comfort level in holding the pencil is improved. Moreover, due to the environment friendliness and non-toxicity of the silicone, the use comfort of a user and the safety during use are further improved.

### Brief Description of the Drawings

The above and other features, advantages and aspects of the embodiments of the present disclosure will become more obvious in combination with the accompanying drawings and with reference to the detailed description below. Throughout the accompanying drawings, the identical or similar reference signals indicate identical or similar elements. It should be understood that the accompanying drawings are for an illustrative purpose, and components and elements are not necessarily drawn to scale.
FIG. 1 is a schematic structural diagram of a silicone pencil preparation device according to some embodiments of the present disclosure; and
FIG. 2 is a flowchart of a silicone pencil preparation method according to some embodiments of the present disclosure.

### Detailed Description of the Invention

The embodiments of the present disclosure will be described in more detail below with reference to the accompanying drawings. Although some embodiments of the present disclosure are shown in the accompanying drawings, it should be understood that the present disclosure can be implemented in various forms and should not be construed as being limited to the embodiments described herein. In contrast, these embodiments are provided for a more through and complete understanding of the present disclosure. It should be understood that the accompanying drawings and embodiments of the present disclosure are for an illustrative purpose only and are not intended to limit the protection scope of the present disclosure.

In addition, it should also be noted that, for the convenience of description, the accompanying drawings only illustrate a part related to the present invention. The embodiments and the features therein in the present disclosure can be combined with each other in the absence of conflicts.

It should be noted that "first", "second" and other concepts mentioned in the present disclosure are only intended to distinguish different apparatuses, modules or units, rather than defining the order or interdependence of the functions performed by these apparatuses, modules or units.

It should be noted that modifications with "a/an" and "a plurality of" mentioned in the present disclosure are for an illustrative purpose instead of a restrictive purpose. Those skilled in the art should understand that they should be understood as "one or more", unless otherwise explicitly indicated in the context.

The names of messages or information exchanged among a plurality of apparatuses in the implementations of the present disclosure are only for an illustrative purpose, rather than limiting the scopes of these messages or information.

The present disclosure will be explained in detail below with reference to the attached drawings and in conjunction with the embodiments.

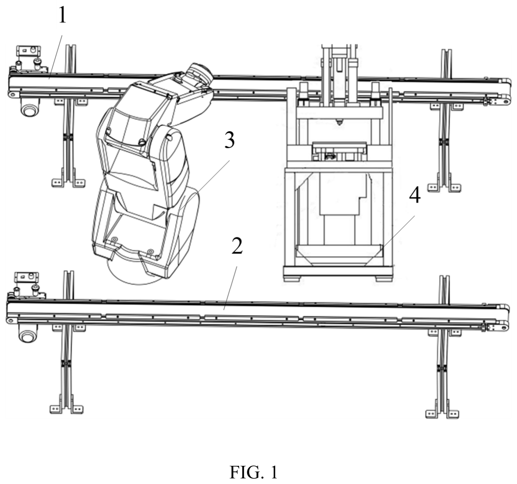

FIG. 1 is a schematic structural diagram of a silicone pencil preparation device according to some embodiments of the present disclosure. FIG. 1 involves an unprocessed pencil conveying apparatus 1, a processed pencil conveying apparatus 2, a grabbing apparatus 3 and a silicone injection molding machine 4.

In some embodiments, the silicone pencil preparation device may comprise a conveying apparatus, the grabbing apparatus 3, the silicone injection molding machine 4, and a control apparatus. Here, the conveying apparatus may be an apparatus for conveying an unprocessed pencil or a processed pencil. The conveying apparatus may comprise the unprocessed pencil conveying apparatus 1 and the processed pencil conveying apparatus 2. The unprocessed pencil conveying apparatus 1 may be configured to convey the unprocessed pencil. The processed pencil conveying apparatus 2 may be configured to convey the processed pencil. As an example, the unprocessed pencil conveying apparatus 1 and the processed pencil conveying apparatus 2 may be both conveying belts. The grabbing apparatus 3 may be an apparatus for grabbing the unprocessed pencil or the processed pencil. For example, the grabbing apparatus 3 may be a robotic arm. The control apparatus may be an apparatus for controlling other apparatuses and machines. For example, the control apparatus may be a single-chip microcomputer.

In some embodiments, the grabbing apparatus may be located between the unprocessed pencil conveying apparatus 1 and the processed pencil conveying apparatus 2. The silicone injection molding machine 4 may be located on either side of the grabbing apparatus.

In some embodiments, the silicone injection molding machine 4 may comprise a main machine. The main machine may be provided with a mold and a mold closing system. The mold may comprise a front mold and a rear mold. The mold may be secured onto the mold closing system comprised in the main machine. The front mold may be provided with a front mold cavity. The rear mold may be provided with a rear mold cavity. A middle portion of the front mold cavity may be provided with a pencil carrying slot. The front mold cavity and the rear mold cavity are connected when the front mold and the rear mold are closed. It can be understood that the pencil carrying slot may be used to fix a pencil in the front mold cavity. The radial line of the pencil carrying slot may be parallel to the radial line of the front mold cavity. The horizontal sectional dimension of the front mold cavity is the same as that of the rear mold cavity. The height of the pencil carrying slot and of the front mold cavity may be lower than that of the unprocessed pencil. Further, the depth of the rear mold cavity may be greater than that of a pencil in the rear mold cavity. In this way, during preparation, the height of the pencil allows it to protrude from the front mold cavity to facilitate the grabbing apparatus 3 to grab the processed pencil. Moreover, silicone protrudes from one end of the pencil, such that the pencil is still convenient to hold by a user even when it is used to a shorter length.

In some embodiments, the conveying apparatus, the grabbing apparatus 3, and the silicone injection molding machine 4 may all be in communication connection with the control apparatus. Here, the specific mode of communication connection for the conveying apparatus, the grabbing apparatus 3 and the silicone injection molding machine 4 is not limited. As an example, the above specific mode may include a wireless connection mode and wired connection mode. The wireless connection mode may include, but is not limited to, 3G/4G connection, WiFi connection, Bluetooth connection, WiMAX connection, Zigbee connection, UWB (ultra-wideband) connection, and other wireless connection modes known at present or to be developed in the future.

In some embodiments, the control apparatus may be configured to perform steps as follows.

In a first step, the grabbing apparatus 3 is controlled to move the unprocessed pencil conveyed by the unprocessed pencil conveying apparatus 1 to the pencil carrying slot. In practice, first, the grabbing apparatus 3 may grab the unprocessed pencil conveyed by the unprocessed pencil conveying apparatus 1. Then, the grabbing apparatus 3 may move to a place above the pencil carrying slot. Afterwards, the grabbing apparatus 3 may rotate the unprocessed pencil to allow it to be oriented vertically. Finally, the grabbing apparatus 3 may place the unprocessed pencil to the pencil carrying slot.

In a second step, the mold closing system comprised in the silicone injection molding machine 4 is controlled to perform a mold closing operation. In practice, a movable mold plate comprised in the mold closing system may move forward to close the front mold and the rear mold.

In a third step, the silicone injection molding machine 4 is controlled to perform an injection molding operation on the front mold cavity and the rear mold cavity.

In a fourth step, the mold closing system comprised in the silicone injection molding machine 4 is controlled to perform a mold splitting operation. In practice, the movable mold plate comprised in the mold closing system may move backward to split the front mold and the rear mold.

In a fifth step, the grabbing apparatus 3 is controlled to move the processed pencil in the pencil carrying slot to the processed pencil conveying apparatus 2. In practice, first, the grabbing apparatus 3 grabs the processed pencil in the pencil carrying slot. Then, the grabbing apparatus 3 may move the processed pencil to the processed pencil conveying apparatus 2. Afterwards, the grabbing apparatus 3 may rotate the processed pencil to allow it to be oriented horizontally. Finally, the grabbing apparatus 3 may place the processed pencil to the processed pencil conveying apparatus 2.

Optionally, the silicone pencil preparation device may further comprise a visual detection apparatus. Here, the visual detection apparatus may be an apparatus for detecting whether a processed pencil is defective. The visual detection apparatus may comprise an image collection assembly, an image processing assembly and an image recognition assembly. The image collection assembly may be an assembly for collecting an image of a processed pencil. For example, the image collection assembly may be a camera. The image processing assembly may be an assembly for preprocessing the collected processed pencil image. The image recognition assembly may be an assembly for recognizing whether the processed pencil corresponding to the collected processed pencil image is defective. For example, the image processing assembly and the image recognition assembly may be both image processing chips. The visual detection apparatus may be disposed on either side of the processed pencil conveying apparatus 2. The visual detection apparatus may be in communication connection with the control apparatus. The visual detection apparatus may be configured to execute the following steps: collecting, by the image collection assembly, an image of the processed pencil carried by the processed pencil conveying apparatus 2 to obtain a processed pencil image; preprocessing, by the image processing assembly, the processed pencil image to obtain a preprocessed processed pencil image; performing, by the image recognition assembly, defect recognition on the preprocessed processed pencil image to obtain a defect recognition result; and sending the defect recognition result to the control apparatus. The control apparatus may be further configured to control, based on the received defect recognition result, the grabbing apparatus 3 to perform a grabbing operation corresponding to the defect recognition result. In this way, whether the processed pencil is defective can be recognized by the visual detection apparatus.

Optionally, the silicone pencil preparation device may further comprise a waste box. The waste box may be located on either side of the grabbing apparatus 3. The control apparatus may be further configured to control, in response to the received defect recognition result representing that a processed pencil is defective, the grabbing apparatus 3 to place the defective processed pencil into the waste box. In this way, the detective processed pencil can be placed into the waste box to improve the quality of the finally conveyed processed pencil.

Optionally, the depth of the pencil carrying slot may be greater than that of the front mold cavity. The inner side of the pencil carrying slot has a shape in engagement with the shape of the outer side of the unprocessed pencil. It can be understood that an unprocessed pencil may tightly attach to the inner wall of the pencil carrying slot when the unprocessed pencil is placed in the pencil carrying slot. The front mold cavity may have a dimension greater than the dimension of the inner side of the pencil carrying slot. A gap between the front mold cavity and the pencil carrying slot may be used to form a silicone layer.

Optionally, the silicone injection molding machine 4 may further comprise a feeding system and a mixing system. The feeding system may be configured to supply a liquid silicone to the main machine. The mixing system may be configured to mix the supplied liquid silicone.

Optionally, the liquid silicone supplied by the feeding system may comprise a first preset liquid silicone and a second preset liquid silicone. The ratio of the first preset liquid silicone to the second preset liquid silicone may be 1:1. Here, the specific materials of the first preset liquid silicone and the second preset liquid silicone are not defined. As an example, the first preset liquid silicone and the second preset liquid silicone may be processed from materials such as polydimethylsiloxane, silica, dimethylpolysiloxane and ethyl silicate.

Optionally, the grabbing apparatus 3 may be a robotic arm. The hand of the robotic arm may be provided with a vacuum cup. The vacuum cup may be shaped as a long strip. A bottom recess of the vacuum cup may have a shape in engagement with the shape of the unprocessed or processed pencil. It can be understood that the portion of the vacuum cup for grabbing an unprocessed pencil has the same shape as that of the unprocessed or processed pencil. In this way, a pencil can be grabbed more quickly by the vacuum cup, and the orientations of the unprocessed and processed pencils can be adjusted more conveniently.

The above-mentioned embodiments of the present disclosure have the following beneficial effects: the silicone pencil prepared by the silicone pencil preparation device, according to some embodiments of the present disclosure, can improve the use comfort of a user and safety during use. Specifically, the reasons for low use comfort of a user and low safety during use caused by the pencil prepared by relevant pencil preparation methods lie in that: a prepared wooden pencil is hard, and the hand of a user using it for a long time is prone to calluses, resulting in low use comfort of a user. Moreover, in most cases, the external paint layer contains harmful substances, which are extremely hazardous to the health of children when they bite it, resulting in low safety during use. Based on this, the silicone pencil preparation device according to some embodiments of the present disclosure comprises a conveying apparatus, a grabbing apparatus, a silicone injection molding machine, and a control apparatus, wherein the conveying apparatus comprises an unprocessed pencil conveying apparatus and a processed pencil conveying apparatus, the unprocessed pencil conveying apparatus is configured to convey an unprocessed pencil, and the processed pencil conveying apparatus is configured to convey a processed pencil; the grabbing apparatus is located between the unprocessed pencil conveying apparatus and the processed pencil conveying apparatus, and the silicone injection molding machine is located on either side of the grabbing apparatus; the silicone injection molding machine comprises a main machine, the main machine is provided with a mold and a mold closing system, the mold comprises a front mold and a rear mold, the mold is secured onto the mold closing system comprised in the main machine, the front mold is provided with a front mold cavity, the rear mold is provided with a rear mold cavity, a middle portion of the front mold cavity is provided with a pencil carrying slot, and the front mold cavity is connected to the rear mold cavity when the front mold and the rear mold are closed; the conveying apparatus, the grabbing apparatus and the silicone injection molding machine are all in communication connection with the control apparatus; and the control apparatus is configured to perform the following steps: controlling the grabbing apparatus to move the unprocessed pencil conveyed by the unprocessed pencil conveying apparatus to the pencil carrying slot, controlling the mold closing system comprised in the silicone injection molding machine to perform a mold closing operation, controlling the silicone injection molding machine to perform an injection molding operation on the front mold cavity and the rear mold cavity, controlling the mold closing system comprised in the silicone injection molding machine to perform a mold splitting operation, and controlling the grabbing apparatus to move the processed pencil in the pencil carrying slot to the processed pencil conveying apparatus. A layer of silicone is inject-molded outside the unprocessed pencil, such that the outer layer of the pencil can be wrapped by the silicone. Due to the softness of the silicone, the comfort level in holding the pencil is improved. Moreover, due to the environment friendliness and non-toxicity of the silicone, the use comfort of a user and the safety during use are further improved.

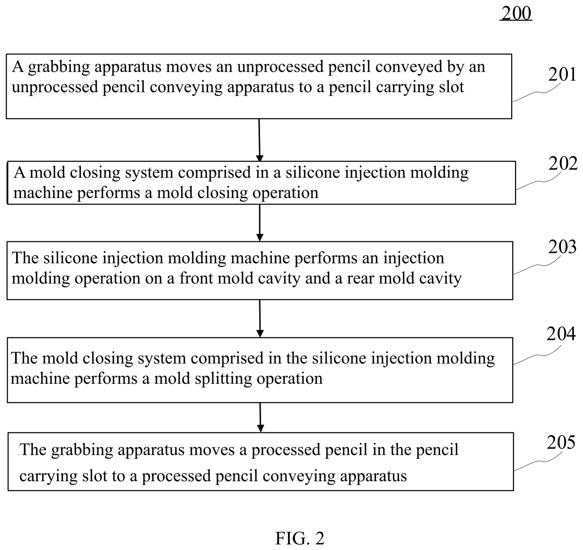

Still referring to FIG. 2, it illustrates a flowchart 200 of a silicone pencil preparation method according to some embodiments of the present disclosure. The silicone pencil preparation method includes the steps as follows.

In step 201, a grabbing apparatus moves an unprocessed pencil conveyed by an unprocessed pencil conveying apparatus to a pencil carrying slot.

In some embodiments, an executive body (e.g., the apparatus for preparing the silicone pencil shown in FIG. 1) in the silicone pencil preparation method may move an unprocessed pencil conveyed by the unprocessed pencil conveying apparatus to the pencil carrying slot by the grabbing apparatus. Here, the conveying apparatus may comprise the unprocessed pencil conveying apparatus and a processed pencil conveying apparatus. The silicone pencil preparation device may comprise the conveying apparatus, the grabbing apparatus, a silicone injection molding machine, and a control apparatus. The silicone injection molding machine may comprise a main machine. The main machine may be provided with a mold and a mold closing system. The front mold may be provided with a front mold cavity. The rear mold may be provided with a rear mold cavity. A middle portion of the front mold cavity may be provided with a pencil carrying slot. In practice, first, the grabbing apparatus grabs an unprocessed pencil conveyed by the unprocessed pencil conveying apparatus. Then, the grabbing apparatus may move to a place above the pencil carrying slot. Afterwards, the grabbing apparatus may rotate the unprocessed pencil to allow it to be oriented vertically. Finally, the grabbing apparatus may place the unprocessed pencil to the pencil carrying slot.

In step 202, a mold closing system comprised in a silicone injection molding machine performs a mold closing operation.

In some embodiments, the executive body may perform the mold closing operation by the mold closing system comprised in the silicone injection molding machine. In practice, a movable mold plate comprised in the mold closing system may move forward to close the front mold and the rear mold.

In step 203, the silicone injection molding machine performs an injection molding operation on a front mold cavity and a rear mold cavity.

In some embodiments, the executive body may perform the injection molding operation on the front mold cavity and the rear mold cavity by the silicone injection molding machine.

Optionally, the silicone injection molding machine may further comprise a heating system, a viscosity sensor and at least one temperature sensor. Here, the heating system may be used to heat the liquid silicone and preheat the mold. The temperature sensor may be used to detect the temperature of the mold and the temperature of the liquid silicone. The at least one temperature sensor comprises a temperature sensor arranged for the mold and a temperature sensor arranged for the liquid silicone. The viscosity sensor may be used to detect the viscosity of the liquid silicone.

In some optional implementations of some embodiments, the executive body may perform the injection molding operation on the front mold cavity and the rear mold cavity by the silicone injection molding machine by means of the steps as follows.

In a first step, the temperature of the mold is detected to obtain mold temperature information. Here, the mold temperature information may represent the temperature of the mold. In practice, the executive body may detect the temperature of the mold by the temperature sensor arranged for the mold, and the detected temperature is taken as mold temperature information.

In a second step, a mold preheating temperature to be adjusted is generated according to preset mold preheating temperature information and the mold temperature information. Here, the preset mold preheating information may represent a preset preheating temperature required to be set during preparation by the mold. The mold preheating temperature to be adjusted may be the temperature to which the mold requires to be heated by the heating system. In practice, the executive body may input the preset mold preheating temperature information and the mold temperature information to a pre-trained model for generating the mold preheating temperature to be adjusted, to obtain the mold preheating temperature to be adjusted. Here, the model for generating the mold preheating temperature to be adjusted may be a neural network model taking the preset mold preheating temperature information and the mold temperature information as inputs and the mold preheating temperature to be adjusted as an output. For example, the model for generating the mold preheating temperature to be adjusted may be a convolutional neural network model.

In a third step, the mold is preheated by the heating system according to the mold preheating temperature to be adjusted and a preset mold heating time. Here, the preset mold preheating time may be a preset duration for preheating the mold. In practice, the executive body may heat the mold by the heating system for a preset mold preheating time at the mold preheating temperature to be adjusted. It can be understood that the mold preheating temperature to be adjusted may be updated with the detected mold temperature information.

In a fourth step, the temperature of the liquid silicone is detected to obtain silicone temperature information. Here, the silicone temperature information may represent the temperature of the liquid silicone. In practice, the executive body may detect the temperature of the liquid silicone by the temperature sensor arranged for the liquid silicone, and the detected temperature is taken as silicone temperature information.

In a fifth step, a silicone preheating temperature to be adjusted is generated according to preset silicone temperature information and the silicone temperature information. Here, the preset mold preheating information may represent a preset preheating temperature required to be set for the liquid silicone. The silicone preheating temperature to be adjusted may be the temperature to which the liquid silicone requires to be heated by the heating system. In practice, the executive body may input the preset silicone preheating temperature information and the silicone temperature information to a pre-trained model for generating the silicone preheating temperature to be adjusted, to obtain the silicone preheating temperature to be adjusted. Here, the model for generating the silicone preheating temperature to be adjusted may be a neural network model taking the preset silicone preheating temperature information and the silicone temperature information as inputs and the silicone preheating temperature to be adjusted as an output. For example, the model for generating the silicone preheating temperature to be adjusted may be a convolutional neural network model.

In a sixth step, liquid silicone to be injected is preheated by the preheating system according to the silicone preheating temperature to be adjusted. In practice, the executive body may heat the silicone by the heating system at the silicone preheating temperature to be adjusted. It can be understood that the silicone preheating temperature to be adjusted may be updated with the detected silicone temperature information.

In a seventh step, according to a target injection molding pressure and a target injection molding speed, an injection molding operation corresponding to the target injection molding pressure and the target injection molding speed is performed by the injection molding system comprised in the silicone injection molding machine. Here, the target injection molding pressure and the target injection molding speed may be determined by an artificial intelligence chip according to a real-time silicone temperature detected by the temperature sensor and a real-time silicone viscosity detected by the viscosity sensor. A machine learning mold carried by the artificial intelligence chip may be obtained by training with a training sample set. Training samples in the training sample set include sample silicone temperatures and sample silicone viscosities. Specifically, the machine learning model carried by the artificial intelligence chip is trained by taking the real-time silicone temperature and the real-time silicone viscosity as inputs and the target injection molding pressure and the target injection molding speed as desired outputs. As an example, the machine learning model may be a convolutional neural network.

The above related content as an inventive point of the embodiment of the present disclosure solves the second technical problem mentioned in the background art section that "the speed of preparing the pencil is not determined according to the characteristics of preparation materials, such that the prepared pencils have a low pass rate and more pencils are discarded, resulting in a waste of resources". The reason for the waste of resources lies in that the speed of preparing the pencil is not determined according to the characteristics of preparation materials, such that the prepared pencils have a low pass rate and more pencils are discarded. The waste of resources can be reduced as long as this problem is solved. To achieve this effect, the silicone injection molding machine comprised in the silicone pencil preparation device according to the present disclosure further comprises a heating system, a viscosity sensor and at least one temperature sensor. Performing the injection molding operation on the front mold cavity and the rear mold cavity by the silicone injection molding machine, includes: detecting a temperature of the mold to obtain mold temperature information, generating a mold preheating temperature to be adjusted according to preset mold preheating temperature information and the mold temperature information, preheating the mold by the heating system according to the mold preheating temperature to be adjusted and a preset mold heating time, and detecting a temperature of the liquid silicone to obtain silicone temperature information. Here, the silicone temperature information may represent the temperature of the liquid silicone; a silicone preheating temperature to be adjusted is generated according to preset silicone temperature information and the silicone temperature information; liquid silicone to be injected is preheated by the preheating system according to the silicone preheating temperature to be adjusted; and according to a target injection molding pressure and a target injection molding speed, an injection molding operation corresponding to the target injection molding pressure and the target injection molding speed is performed by the injection molding system comprised in the silicone injection molding machine, wherein the target injection molding pressure and the target injection molding speed are determined by an artificial intelligence chip according to a real-time silicone temperature detected by the temperature sensor and a real-time silicone viscosity detected by the viscosity sensor, a machine learning mold carried by the artificial intelligence chip is obtained by training with a training sample set, in which training samples include sample silicone temperatures and sample silicone viscosities. The preheating temperature of the mold or liquid silicone can be determined according to the real-time temperature, such that the mold or liquid silicone can be preheated at a more accurate temperature. Furthermore, the injection molding pressure and the injection molding speed are determined according to the temperature and viscosity of the liquid silicone, such that the injection molding can be conducted at more accurate injection molding pressure and speed. In this way, the generation of bubbles is reduced, the pass rate of the prepared silicone pencils is increased, the probability of discarding the silicone pencil is reduced, and thus the waste of resources is reduced.

In step 204, the mold closing system comprised in the silicone injection molding machine performs a mold splitting operation.

In some embodiments, the executive body may perform the mold splitting operation by the mold closing system comprised in the silicone injection molding machine. In practice, the movable mold plate comprised in the mold closing system may move backward to split the front mold and the rear mold.

In step 205, the grabbing apparatus moves a processed pencil in the pencil carrying slot to a processed pencil conveying apparatus. In practice, first, the grabbing apparatus grabs the processed pencil in the pencil carrying slot. Then, the grabbing apparatus may move to a place above the processed pencil conveying apparatus. Afterwards, the grabbing apparatus may rotate the processed pencil to allow it to be oriented horizontally. Finally, the grabbing apparatus may place the processed pencil to the processed pencil conveying apparatus.

In some embodiments, the executive body may move the processed pencil in the pencil carrying slot to the processed pencil conveying apparatus by the grabbing apparatus.

Optionally, the silicone pencil preparation device may further comprise a visual detection apparatus and a rotation apparatus. Here, the rotation apparatus may be an apparatus for rotating a processed pencil. As an example, the rotation apparatus may be a 180° rotation apparatus. As another example, the rotation apparatus may also be a robotic arm.

Optionally, the executive body may further execute the steps as follows.

In a first step, an image of a processed pencil carried on the processed pencil conveying apparatus under a first light source and an image of the processed pencil under a second light source are collected by the visual detection apparatus to obtain a first processed pencil image and a second processed pencil image. Here, the first light source and the second light source may be both apparatuses for illumination. For example, the first light source and the second light source may be both flashlights. The first light source and the second light source may be disposed on different positions.

In a second step, a rotating operation is performed on the processed pencil by the rotation apparatus. As an example, the rotation apparatus may grab and rotate the processed pencil 180°.

In a third step, an image of the rotated processed pencil under the first light source and an image of the rotated processed pencil under the second light source are collected to obtain a first rotated pencil image and a second rotated pencil image.

In a fourth step, denoising is performed on the first processed pencil image and the second processed pencil image to obtain a first denoised processed pencil image and a second denoised processed pencil image. In practice, the executive body may perform denoising on the first processed pencil image and the second processed pencil image in a variety of denoising modes, to obtain a first denoised processed pencil image and a second denoised processed pencil image. As an example, the variety of denoising modes may include, but not limited to, at least one of: mean filtering, median filtering and Gaussian filtering.

In a fifth step, denoising is performed on the first rotated pencil image and the second rotated pencil image to obtain a first denoised rotated pencil image and a second denoised rotated pencil image. In practice, the executive body may perform denoising on the first rotated pencil image and the second rotated pencil image in a variety of denoising modes, to obtain a first denoised rotated pencil image and a second denoised rotated pencil image.

In a sixth step, the edges of the first denoised processed pencil image and the second denoised processed pencil image are processed to obtain a first processed pencil edge image and a second processed pencil edge image. In practice, the executive body may process edges of the first processed pencil image and the second processed pencil image in a variety of edge processing modes, to obtain a first processed pencil edge image and a second processed pencil edge image. As an example, the edge processing modes may include, but not limited to, at least any one of: canny operator, Roberts operator, Prewitt operator, and Sobel operator.

In a seventh step, the edges of the first denoised rotated pencil image and the second denoised rotated pencil image are processed to obtain a first rotated pencil edge image and a second rotated pencil edge image. In practice, the executive body may process edges of the first rotated pencil image and the second rotated pencil image in a variety of edge processing modes, to obtain a first rotated pencil edge image and a second rotated pencil edge image.

In an eighth step, a defect recognition result corresponding to the processed pencil is determined based on the first processed pencil edge image, the second processed pencil edge image, the first rotated pencil edge image and the second rotated pencil edge image. In practice, the executive body may determine the defect recognition result corresponding to the processed pencil by performing the steps as follows.

In a first sub-step, at least one first defect region of the first processed pencil edge image is determined. Here, the first defect region may be a coordinate set representing a defective position of the pencil. The defect may be at least one of: breakage, dirt, and crack. In practice, first, for each first processed pencil edge image pixel in the first processed pencil edge image, the similarity between the first processed pencil edge image pixel and a pixel in a target corrosion-resistant sleeve image corresponding to the first processed pencil edge image pixel is determined as a first similarity. As an example, the executive body may determine the similarity between the first processed pencil edge image pixel and the pixel in the target corrosion-resistant sleeve image corresponding to the first processed pencil edge image pixel in respective similarity algorithms. For example, the respective similarity algorithms include an RGB similar color approximation algorithm, a color histogram GLCM (Gray-level Co-occurrence Matrix), and an LBP (Local Binary Pattern). Then, the executive body may determine each first processed pencil edge image pixel with the corresponding first similarity less than or equal to a preset similarity threshold as a first defect region.

In a second sub-step, at least one second defect region of the second processed pencil edge image is determined. In practice, for each second processed pencil edge image pixel in the second processed pencil edge image, the similarity between the second processed pencil edge image pixel and a pixel in the target corrosion-resistant sleeve image corresponding to the second processed pencil edge image pixel is determined as a second similarity. As an example, the executive body may determine the similarity between the second processed pencil edge image pixel and the pixel in the target corrosion-resistant sleeve image corresponding to the second processed pencil edge image pixel in respective similarity algorithms. Then, the executive body may determine each first processed pencil edge image pixel with the corresponding second similarity less than or equal to a preset similarity threshold, as a second defect region.

In a third sub-step, for each of the at least one first defect region, the similarity between the first defect region and a second defect region of the at least one second defect region corresponding to the first defect region is determined as a forward similarity. In practice, the executive body may determine the similarity between the first defect region and a second defect region of the at least one second defect region corresponding to the first defect region by means of a variety of similarity algorithms.

In a fourth sub-step, each first defect region with the corresponding forward similarity greater than or equal to a preset similarity threshold is determined as a common defect region.

In a fifth sub-step, the ratio of the area of each common defect region to the area of the first processed pencil edge image is determined as a forward defect ratio.

In a sixth sub-step, at least one first rotation defect region of the first rotated pencil edge image is determined. In practice, first, for each first rotated pencil edge image pixel in the first rotated pencil edge image, the similarity between the first rotated pencil edge image pixel and a pixel in a target corrosion-resistant sleeve image corresponding to the first rotated pencil edge image pixel is determined as a first rotation similarity. Here, the step of determining the first rotation similarity is the same as that of determining the first similarity, which will not be repeated here in detail.

In a seventh sub-step, at least one second rotation defect region of the second rotated pencil edge image is determined. Here, the step of determining the second rotation similarity is the same as that of determining the second similarity, which will not be repeated here in detail.

In an eighth sub-step, for each of the at least one first rotation defect region, the similarity between the first rotation defect region and a second rotation defect region of the at least one second rotation defect region corresponding to the first rotation defect region is determined as a rotation similarity. Here, the step of determining the rotation similarity is the same as that of determining the forward similarity, which will not be repeated here in detail.

In a ninth sub-step, each first rotation defect region with the corresponding rotation similarity greater than or equal to a preset similarity threshold is determined as a common rotation defect region.

In a tenth sub-step, the ratio of the area of each common rotation defect region to the area of the first rotated pencil edge image is determined as a rotation defect ratio.

In an eleventh sub-step, the defect recognition result corresponding to the processed pencil is determined based on the forward defect ratio and the rotation defect ratio. As an example, in response to determining that the forward defect ratio and/or the rotation defect ratio are/is greater than or equal to a preset rotation defect ratio threshold, the processed pencil being defective is determined as the defect recognition result corresponding to the processed pencil. In response to determining that the forward defect ratio and/or the rotation defect ratio are/is less than the preset rotation defect ratio threshold, the processed pencil being non-defective is determined as the defect recognition result corresponding to the processed pencil. In this way, pencils with larger defects can be screened.

In a ninth step, a grabbing operation corresponding to the defect recognition result is performed based on the determined defect recognition result.

The above related content as an inventive point of the embodiment of the present disclosure solves the third technical problem mentioned in the background art section that "defect recognition is not performed on the front and back sides of the prepared pencil, such that the pencil finally obtained by a user may have many defects and a bad sense of use, resulting in poor user experience". The reason for the poor user experience lies in that defect recognition is not performed on the front and back sides of the prepared pencil, such that the pencil finally obtained by a user may have many defects and a bad sense of use. The user experience can be improved if this problem is solved. To achieve this effect, the silicone pencil preparation device according to the present disclosure further comprises a visual detection apparatus and a rotation apparatus.

The method further includes: collecting an image of a processed pencil carried on the processed pencil conveying apparatus under a first light source and an image of the processed pencil under a second light source by the visual detection apparatus to obtain a first processed pencil image and a second processed pencil image; performing a rotating operation on the processed pencil by the rotation apparatus; collecting an image of the rotated processed pencil under the first light source and an image of the rotated processed pencil under the second light source to obtain a first rotated pencil image and a second rotated pencil image; performing denoising on the first processed pencil image and the second processed pencil image to obtain a first denoised processed pencil image and a second denoised processed pencil image; performing denoising on the first rotated pencil image and the second rotated pencil image to obtain a first denoised rotated pencil image and a second denoised rotated pencil image; processing edges of the first denoised processed pencil image and the second denoised processed pencil image to obtain a first processed pencil edge image and a second processed pencil edge image; processing edges of the first denoised rotated pencil image and the second denoised rotated pencil image to obtain a first rotated pencil edge image and a second rotated pencil edge image; determining a defect recognition result corresponding to the processed pencil based on the first processed pencil edge image, the second processed pencil edge image, the first rotated pencil edge image and the second rotated pencil edge image; and performing a grabbing operation corresponding to the defect recognition result based on the determined defect recognition result. Whether a defect exists is determined by collecting the images of the same processed pencil under different illuminations, such that whether the processed pencil is defective can be more accurately recognized. Furthermore, whether a defect exists is determined by rotating and collecting the images of the same processed pencil, such that whether the processed pencil is defective can be more completely recognized. In this way, the processed pencils with large defects can be placed into the waste box to improve the quality of the finally obtained processed pencil, such that the user's sense of use and then the user experience are improved.

The above-mentioned embodiments of the present disclosure have the following beneficial effects: the silicone pencil prepared by the silicone pencil preparation method according to some embodiments of the present disclosure can improve the use comfort of a user and the safety during use. Specifically, the reasons for low use comfort of a user and low safety during use caused by the pencil prepared by relevant pencil preparation methods lie in that: a prepared wooden pencil is hard, and the hand of a user using it for a long time is prone to calluses. Moreover, in most cases, the external paint layer contains harmful substances, which are extremely hazardous to the health of children when they bite it. Based on this, the silicone pencil preparation method according to some embodiments of the present disclosure includes: moving an unprocessed pencil conveyed by the unprocessed pencil conveying apparatus to the pencil carrying slot by the grabbing apparatus, performing a mold closing operation by the mold closing system comprised in the silicone injection molding machine, performing an injection molding operation on the front mold cavity and the rear mold cavity by the silicone injection molding machine, performing a mold splitting operation by the mold closing system comprised in the silicone injection molding machine, and moving the processed pencil in the pencil carrying slot to the processed pencil conveying apparatus by the grabbing apparatus. A layer of silicone is inject-molded outside the unprocessed pencil, such that the outer layer of the pencil can be wrapped by the silicone. Due to the softness of the silicone, the comfort level in holding the pencil is improved. Moreover, due to the environment friendliness and non-toxicity of the silicone, the use comfort of a user and the safety during use are further improved.

Described above are merely preferred embodiments of the present disclosure and an explanation of the applied technical principles. Those skilled in the art should understand that the scope of invention involved in the embodiments of the present disclosure is not limited to the technical solutions formed by a specific combination of the technical features described above, and should also cover other technical solutions formed by randomly combining the technical features described above or equivalent features thereof without departing from the inventive concept, for example, a technical solution formed by the mutual substitution between the features described above and the technical features having similar functions and disclosed (but not limited thereto) in the embodiments of the present disclosure.

## Claims

1. A silicone pencil preparation device, comprising a conveying apparatus, a grabbing apparatus, a silicone injection molding machine, and a control apparatus, wherein
the conveying apparatus comprises an unprocessed pencil conveying apparatus and a processed pencil conveying apparatus, the unprocessed pencil conveying apparatus is configured to convey an unprocessed pencil, and the processed pencil conveying apparatus is configured to convey a processed pencil;
the grabbing apparatus is located between the unprocessed pencil conveying apparatus and the processed pencil conveying apparatus, and the silicone injection molding machine is located on either side of the grabbing apparatus;
the silicone injection molding machine comprises a main machine, the main machine is provided with a mold and a mold closing system, the mold comprises a front mold and a rear mold, the mold is secured onto the mold closing system comprised in the main machine, the front mold is provided with a front mold cavity, the rear mold is provided with a rear mold cavity, a middle portion of the front mold cavity is provided with a pencil carrying slot, and the front mold cavity is connected to the rear mold cavity when the front mold and the rear mold are closed;
the conveying apparatus, the grabbing apparatus and the silicone injection molding machine are all in communication connection with the control apparatus; and
the control apparatus is configured to perform the following steps:
controlling the grabbing apparatus to move the unprocessed pencil conveyed by the unprocessed pencil conveying apparatus to the pencil carrying slot,
controlling the mold closing system comprised in the silicone injection molding machine to perform a mold closing operation,
controlling the silicone injection molding machine to perform an injection molding operation on the front mold cavity and the rear mold cavity,
controlling the mold closing system comprised in the silicone injection molding machine to perform a mold splitting operation, and
controlling the grabbing apparatus to move the processed pencil in the pencil carrying slot to the processed pencil conveying apparatus.

2. The silicone pencil preparation device according to claim 1, further comprising a visual detection apparatus, which is disposed on either side of the processed pencil conveying apparatus, wherein the visual detection apparatus is in communication connection with the control apparatus, and comprises an image collection assembly, an image processing assembly and an image recognition assembly;
the visual detection apparatus is configured to perform the following steps:
collecting, by the image collection assembly, an image of the processed pencil carried by the processed pencil conveying apparatus to obtain a processed pencil image,
preprocessing, by the image processing assembly, the processed pencil image to obtain a preprocessed processed pencil image,
performing, by the image recognition assembly, defect recognition on the preprocessed processed pencil image to obtain a defect recognition result, and
sending the defect recognition result to the control apparatus; and
the control apparatus is further configured to control, based on the received defect recognition result, the grabbing apparatus to perform a grabbing operation corresponding to the defect recognition result.

3. The silicone pencil preparation device according to claim 2, further comprising a waste box, which is located on either side of the grabbing apparatus; and
the control apparatus is further configured to control, in response to the received defect recognition result representing that a processed pencil is defective, the grabbing apparatus to place the defective processed pencil into the waste box.

4. The silicone pencil preparation device according to claim 1, wherein the pencil carrying slot has a depth greater than that of the front mold cavity; and
an inner side of the pencil carrying slot has a shape in engagement with a shape of an outer side of the unprocessed pencil, the front mold cavity has a dimension greater than a dimension of the inner side of the pencil carrying slot, and a gap between the front mold cavity and the pencil carrying slot is used to form a silicone layer.

5. The silicone pencil preparation device according to claim 1, further comprising a feeding system and a mixing system, wherein the feeding system is configured to supply liquid silicone to the main machine, and the mixing system is configured to mix the supplied liquid silicone.

6. The silicone pencil preparation device according to claim 5, wherein the liquid silicone supplied by the feeding system comprises a first preset liquid silicone and a second preset liquid silicone, and wherein a ratio of the first preset liquid silicone to the second preset liquid silicone is 1: 1.

7. The silicone pencil preparation device according to claim 1, wherein the grabbing apparatus is a robotic arm, a hand of the robotic arm is provided with a vacuum cup shaped as a long strip, and a bottom recess of the vacuum cup has a shape in engagement with a shape of the unprocessed or processed pencil.

8. A silicone pencil preparation method, which is applied to the silicone pencil preparation device according to any one of claims 1 to 7, wherein the silicone pencil preparation device comprises a conveying apparatus, a grabbing apparatus, a silicone injection molding machine, and a control apparatus, the conveying apparatus comprises an unprocessed pencil conveying apparatus and a processed pencil conveying apparatus, the silicone injection molding machine comprises a main machine, the main machine is provided with a mold and a mold closing system, the mold comprises a front mold and a rear mold, the front mold is provided with a front mold cavity, the rear mold is provided with a rear mold cavity, and a middle portion of the front mold cavity is provided with a pencil carrying slot; and the method comprises:
moving an unprocessed pencil conveyed by the unprocessed pencil conveying apparatus to the pencil carrying slot by the grabbing apparatus,
performing a mold closing operation by the mold closing system comprised in the silicone injection molding machine,
performing an injection molding operation on the front mold cavity and the rear mold cavity by the silicone injection molding machine,
performing a mold splitting operation by the mold closing system comprised in the silicone injection molding machine, and
moving the processed pencil in the pencil carrying slot to the processed pencil conveying apparatus by the grabbing apparatus.
